# EUROPÄISCHE PATENTSCHRIFT

(11) **EP 0 322 546 B1**
(45) Veröffentlichungstag und Bekanntmachung des Hinweises auf die Patenterteilung: **02.06.1993**
(21) Anmeldenummer: 88118729.8
(22) Anmeldetag: 10.11.1988
(51) Int. Cl.: F16K 5/20, F16K 39/06

(54) **Kugelhahn**
Ball plug valve
Robinet à boisseau sphérique

(30) Priorität: 29.12.1987 DE 3744452
(43) Veröffentlichungstag der Anmeldung: 05.07.1989
(73) Patentinhaber: Feodor Burgmann Dichtungswerke GmbH & Co., D-82515 Wolfratshausen (DE)
(72) Erfinder: Zatterin, Hans-Werner, Dipl. Ing., D-8190 Wolfratshausen (DE)
(74) Vertreter: Schmidt, Horst, Dr.

(56) Entgegenhaltungen:
- DE-A- 3 303 813
- GB-A- 655 078
- GB-A- 1 338 990

## Beschreibung

Die Erfindung betrifft einen Kugelhahn gemäss Oberbegriff des Patentanspruches und insbesondere einen solchen mit verbesserter Dichtwirkung unter erhöhten Temperaturen, z.B. bei Feuereinwirkung.

Ein bekannter Kugelhahn (GB-A- 1 338 990) umfasst auf- und abstromseitig der Kugel vorgesehene Dichtungsanordnungen mit jeweils einem Hauptdichtungselement, das durch eine Tellerfeder gegen die Kugel vorgespannt ist. Zur Abdichtung des Hauptdichtungselementes gegenüber dem umgebenden Gehäuse dient ein O-Ring aus elastomerem Material. Das Gehäuse ist mehrteilig ausgebildet, wobei die Gehäuseteile unter Zwischenanordnungen von Dichtungen gegeneinander verspannt sind. Die auf- und abstromseitigen Druckwirkflächen des Hauptdichtungselementes sind so aufeinander abgestimmt, dass das durch unvermeidliche Leckage in einem Totraum zwischen den Dichtungsanordnungen einsickernde Medium zurück in die Durchgangspassage des Kugelhahnes gebracht wird, sobald der Druck im Totraum einen bestimmten Wert überschreitet. Ohne diese Massnahme würde der erhöhte Druck im Totraum, wie er z.B. unter Feuereinwirkung auftreten kann, dazu führen, dass die Dichtwirkung zwischen den Gehäuseteilen und längs der Betätigungswelle der Kugel verlorengeht, so dass das Medium längs dieser Teile an die Umgebung gelangen kann. In Gegenwart aggressiver oder toxischer Medium kann dies verheerende Folgen für die Umwelt haben. Unter hohen Temperaturen, insbesondere unter Feuereinwirkung, könnte der O-Ring als notwendige Sekundärdichtung zwischen Hauptdichtungselement und Gehäuse bei dem bekannten Kugelhahn zerstört werden und ferner das Vorspannelement seine Funktion weitgehend einbüssen, so dass auch die abdichtende Beziehung zwischen Hauptdichtungselement und Kugel herabgesetzt wird. Feuereinwirkung bedeutet daher eine weitgehende Zerstörung der gesamten Dichtungsanordnungen mit entsprechenden Kosten für die Überholung sowie die Möglichkeit, dass das abzudichtende Medium über die zerstörte Dichtungsanordnung nach aussen treten kann.

Der Erfindung liegt die Aufgabe zugrunde, einen Kugelhahn der im Oberbegriff des Patentanspruches genannten Gattung mit einem verbesserten Schutz gegen einen Austritt des abzudichtenden Mediums bei erhöhten Temperaturen, insbesondere bei Feuereinwirkung, zu schaffen. Insbesondere soll ein derartiger Schutz ohne wesentlichen baulichen Mehraufwand erzielt werden.

Diese Aufgabe wird erfindungsgemäss durch die Merkmale im kennzeichnenden Teil des Patentanspruches gelöst. Die Ausbildung des Vorspannelementes aus einem elastischen Kohlenstoffmaterial wie verpresster Graphit mit federähnlichem Kraftverformungsverhalten bedeutet nicht nur, dass im Vergleich zu herkömmlichen Federelementen wesentlich höhere Vorspannkräfte mit entsprechender Auswirkung auf die dichtende Beziehung zwischen der Dichtfläche des Hauptdichtungselementes und der Kugel aufgebracht werden können, sondern auch gleichzeitig die Schaffung einer weiteren Sekundärdichtfunktion, indem das Vorspannelement die Funktion des eigentlichen Sekundärdichtungselementes (O-Ring) übernehmen kann. Unter Umständen kann daher auf das Vorsehen eines separaten Sekundärdichtungselementes verzichtet werden. Die wesentlich höhere Temperaturbeständigkeit des Kohlenstoff-Vorspannelementes bedeutet, dass die Vorspannkraft selbst unter extremen Temperaturbedingungen, wie im Feuerfall, praktisch unverändert erhalten bleibt, und dass unter solchen Bedingungen keine Zerstörung des Vorspannelementes eintritt, so dass auch dessen Dichtfunktion erhalten bleibt. Die Feuereinwirkung hat daher nicht notwendigerweise einen Verlust der Dichtfunktion der gesamten Dichtungsanordnung zur Folge. Ein mit erfindungsgemässen Dichtungsanordnungen ausgestatteter Kugelhahn besitzt daher einen erhöhten Schutz gegen den Austritt des abzudichtenden Mediums an die Umgebung. Dabei werden diese Vorteile mit einem baulichen Aufwand erzielt, der sich praktisch nicht von dem bekannter Anordnungen unterscheidet.

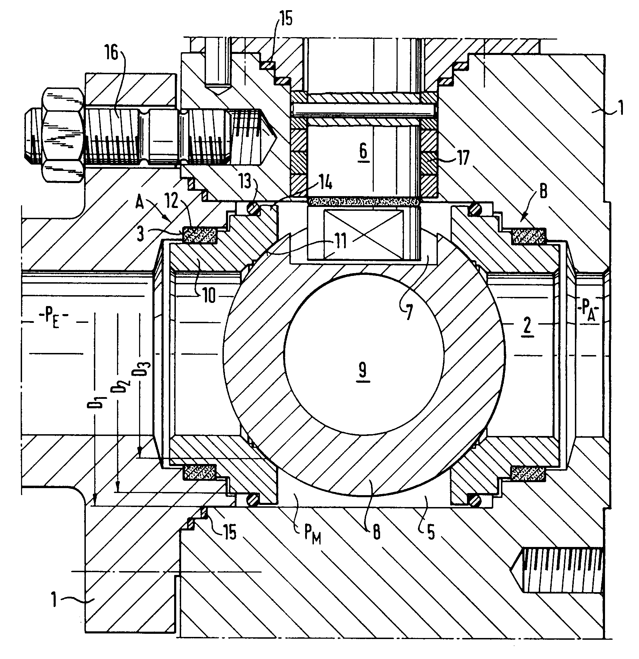

Die Erfindung wird nachfolgend anhand der Zeichnung, die eine fragmentarische geschnittene Ansicht eines erfindungsgemäß aufgebauten Kugelhahnes zeigt, näher erläutert.

Der Kugelhahn umfaßt, wie dargestellt, ein Gehäuse 1, welches in bekannter Weise aus mehreren Teilen besteht, die unter Zwischenanordnung von geeigneten Dichtungen 15 durch Schrauben 16 gegeneinander verspannt sein können. Das Gehäuse ist ferner von einer Duchgangsbohrung oder -passage 2 durchsetzt, die sich von äußeren Abschnitten mit Nennabmessung nach innen unter Bildung zwischenliegender abgestufter Bereiche zu einer zentralen Kammer erweitert, in der eine Kugel 8 mit einer bei 9 angedeuteten Durchbohrung aufgenommen ist. Die Kugel 8 hat eine äußere Ausnehmung 7, welche einen Zapfen am unteren Ende einer in einer Bohrung im Gehäuse 1 gelagerten Betätigungswelle 6 aufnimmt, mit deren Hilfe die Kugel um eine Achse senkrecht zur Längsachse der Durchgangspassage 2 gedreht werden kann, um die Durchbohrung 9 der Kugel 8 in und aus einer ausgerichteten Beziehung zur Durchgangspassage 2 zu bringen. Die Betätigungswelle 6 ist in geeigneter, dem Fachmann grundsätzlich bekannter Weise, wie bei 17 angedeutet, gegenüber dem Gehäuse 1 abgedichtet und kann an der Außenseite des Gehäuses mit nicht gezeigten Betätigungsorganen versehen sein. Wie dargestellt, ist die Betätigungswelle 6 durch die Kammer bzw. den Totraum 5 geführt, so daß die Abdichtung 17 der Betätigungswelle 6 gegenüber dem Gehäuse 1 auf den Druck im Totraum 5 ausgelegt werden muß, um ein Entweichen des abzudichtenden Mediums an die Außenumgebung zu verhindern.

Wie dargestellt, ist die Kugel 8 gegenüber dem Gehäuse 1 durch auf- und abstromseitige Dichtungsanordnungen A,B abgedichtet, welche bei der gezeigten Ausführungsform identisch ausgebildet sind, so daß im folgenden nur eine der Dichtungsanordnungen (in der Zeichnung die linke) näher beschrieben werden braucht. Es versteht sich jedoch, daß auch unterschiedliche auf- und abstromseitige Dichtungsanordnungen vorgesehen werden können, vorausgesetzt wenigstens die aufstromseitige Dichtungsanordnung ist in der erfindungsgemäßen Weise ausgebildet.

Die aufstromseitige Dichtungsanordnung A umfaßt, wie dargestellt, ein ringförmiges Hauptdichtungselement 10 mit einer Dichtfläche 11, die in dichtendem Eingriff mit der äußeren Oberfläche der Kugel 8 steht. Das Hauptdichtungselement 10 besteht aus einem wärmebeständigen Material, wie Metall, doch können auch andere geeignete nicht metallische Werkstoffe verwendet werden. Ferner ist vorzugsweise wenigstens die Dichtfläche 11 des Haupdichtungselementes 10 gehärtet. Zwischen Kugel 8 und Hauptdichtungselement 10 kann eine Metall-auf-Metallberührung herrschen.

Das Hauptdichtungselement 10 ist im wesentlichen axial gegen die Kugel 8 mit einer bestimmten Vorspannkraft vorgespannt. Zu diesem Zweck ist auf dem äußeren Umfang eines in der Zeichnung linksseitigen bzw. kugelabgewandten rohrförmigen Bereiches des Hauptdichtungselementes 10 ein im wesentlichen ringförmiges federndes Vorspannelement 12 aufgesetzt, das sich einerends an einer Absatzfläche 3 des Gehäuses 1 und anderenends am Hauptdichtungselement 10 abstützt. Das Vorspannelement 12 besteht aus einem Kohlenstoffmaterial mit Federeigenschaft. Insbesondere handelt es sich um verpreßtes Graphit bzw. Reingraphit, das infolge einer begrenzten Kompressibilität ein elastisches federähnliches Kraft/Verformungsverhalten besitzt. Elemente aus derartigem Material sind z. B. unter dem Handelsnamen "Statotherm" von der Anmelderin der vorliegenden Anmeldung erhältlich.

Zur Abdichtung des Hauptdichtungselementes 10 gegenüber dem Gehäuse 1 ist ein Sekundärdichtungselement 13 vorgesehen, welches auf einem kugelnahen äußeren Umfangsbereich des Hauptdichtungselementes 10 aufgesetzt sein kann und sich an einem daran vorgesehenen Bund 14 abstützt. Beim Sekundärdichtungselement 13 kann es sich um einen O-Ring handeln, doch ist die Erfindung auf eine derartige Ausbildung des Sekundärdichtungselementes 13 nicht beschränkt. Vielmehr könnte unter Erzielung einer verbesserten Temperatursbeständigkeit auch ein Dichtungselement aus Graphit vorgesehen werden.

Der mit dem Umfang der Durchgangspassage 2, insbesondere der zentralen Kammer 5 in Berührung stehende Außendurchmesser des Sekundärdichtungselementes 13 ist mit D₁ und der mit dem Hauptdichtungselement 10 in Berührung stehende Innendurchmesser mit D₂ bezeichnet. D₃ ist der mittlere Durchmesser der Dichtfläche 11 des Hauptdichtungselementes 10. Die Durchmesser D₁, D₂ und D₃ definieren Druckwirkflächen des Hauptdichtungselementes 10, an denen unter Druckeinwirkung resultierende Kraftkomponenten in Axialrichtung der Dichtungsanordnung entstehen.

Insbesondere ist eine der Druckwirkflächen des Hauptdichtungselementes 10 definiert durch die Differenz der Durchmesser D₁ und D₃. Diese Druckwirkfläche an der der Kugel 8 abgewandten Seite des Hauptdichtungselementes 10 bedingt unter dem darauf einwirkenden Druck P_{E} des abzudichtenden Mediums (Druck an der Aufstromseite der Kugel 8) eine axiale Kraftkomponente, welche das Hauptdichtungselement 10 gegen die Kugel 8 bewegen will und damit die Vorspannkraft des Vorspannelementes 12 grundsätzlich unterstützt. Eine andere entgegengesetzte Druckwirkfläche des Hauptdichtungselementes 10 ist durch die Differenz der Durchmesser D₂ und D₃ definiert und befindet sich an der der Kugel 8 zugewandten Seite des Hauptdichtungselementes. Diese Druckwirkfläche ist dem Druck P_{M} in einem Totraum 5 ausgesetzt, der zwischen den auf- und abstromseitigen Dichtungsanordnungen A, B, dem Gehäuse 1 und der Außenfläche der Kugel 8 definiert und grundsätzlich gegenüber der Durchgangspassage 2 durch das Sekundärdichtungselement 13 und die Dichtfläche 11 des Hauptdichtungselementes 10 abgedichtet ist. Durch unvermeidbare Leckage des abzudichtenden Mediums längs der Dichtfläche 11 als auch infolge einer vorübergehenden Verbindung zwischen dem Totraum 5 und der Durchgangspassage 2 bei der Drehung der Kugel von der Schließ- in die Öffnungsstellung herrscht im Totraum 5 im allgemeinen ein Druck P_{M}, der dem Druck P_{E} des abzudichtenden Mediums entspricht. Mit P_{A} ist der Druck an der Abstromseite der Kugel 8 bezeichnet, der in Schließstellung der Kugel im allgemeinen gleich 0 ist.

Unter normalen Betriebsbedingungen ist der zulässige Abdichtdruck zwischen Betätigungswelle 6 und Gehäuse 1 wesentlich größer als der Druck P_{M} im Totraum 5, so daß eine ausreichende Dichtwirkung gewährleistet ist. Bei Einwirken hoher Temperaturen, z.B. bei Brand oder dgl. kann der Druck P_{M} im Totraum 5 jedoch unter Umständen soweit ansteigen, daß der zulässige Druck überschritten wird und es daher zu einem Entweichen des Mediums nach außen entweder längs der Betätigungswelle 6 kommen kann oder längs der Gehäusedichtungen 15 infolge Spaltbildung zwischen den Gehäuseteilen.

Dies wird dadurch verhindert, daß die dem Druck P_{E} bzw. P_{M} ausgesetzten Druckwirkflächen des Hauptdichtungselementes 10 so dimensioniert bzw. aufeinander abgestimmt sind, daß bei einem bestimmten Druck im Totraum 5, der größer als der Druck des abzudichtenden Mediums und kleiner als der zulässige Druck ist, eine resultierende axiale Kraftkomponente auf das Hauptdichtungselement 10 wirkt, die dieses gegen die Kraft des Vorspannelementes 12 weg von der dichtenden Eingriffnahme mit der Kugel 8 bewegt, so daß eine Verbindung zwischen dem Totraum 5 und dem aufstromseitigen Abschnitt der Durchgangspassage 2 zustande kommt. Es findet daher eine automatische Druckentlastung des Totraumes 5 statt, und, sobald der Druck im Totraum 5 wieder auf Nenndruck abgefallen ist, wird durch die Vorspannkraft des Vorspannelementes 12 die ursprüngliche dichtende Eingriffnahme zwischen Hauptdichtungselementes 10 und Kugel 8 wieder hergestellt.

## Patentansprüche

1. Kugelhahn mit einem eine Durchgangspassage (2) definierenden Gehäuse (1), einem darin drehbar gehaltenen durchbohrten Kugelelement (8), das zum Öffnen und Schliessen der Durchgangspassage zwischen einer offenen und geschlossenen Position bewegbar ist, und einem Paar an- und abstromseitig des Kugelelementes vorgesehenen Dichtungsanordnungen (A,B) zur Abdichtung des Kugelelementes gegenüber dem Gehäuse, wobei die Dichtungsanordnungen zwischen sich eine Kammer (5) definieren, die wenigstens in der Schliesstellung des Kugelelementes gegenüber der Durchgangspassage im wesentlichen abgedichtet ist, und wobei wenigstens die aufstromseitige Dichtungsanordnung folgende Elemente aufweist: ein relativ zum Kugelelement begrenzt bewegliches Hauptdichtungselement (10), ein Sekundärdichtungselement (13) zur Abdichtung des Hauptdichtungselementes gegenüber dem Gehäuse sowie ein Vorspannelement (12) zur Vorspannung des Hauptdichtungselementes gegen das Kugelelement, wobei das Hauptdichtungselement Druckwirkflächen hat, von denen eine dem aufstromseitig des Kugelelementes herrschenden Druck und die andere dem in der Kammer herrschenden Druck des Mediums ausgesetzt ist und welche so bemessen sind, dass unter einem bestimmten Druck in der Kammer das Hauptdichtungselement aus der dichtenden Eingriffnahme mit dem Kugelelement gegen eine Kraft bewegbar ist, die auf das Hauptdichtungselement durch das Vorspannelement und den aufstromseitig des Hauptdichtungselementes herrschenden Druck ausgeübt wird, dadurch gekennzeichnet, dass das Vorspannelement (12) aus einem elastischen Kohlenstoffmaterial wie verpresster Graphit mit federähnlichem Kraftverformungsverhalten gebildet und zwischen einem in Axialrichtung vom Kugelelement ferneren Bereich des Hauptdichtungselementes als das Sekundärdichtungselement und dem Gehäuse angeordnet ist.

2. Kugelhahn nach Anspruch 1, dadurch gekennzeichnet, daß eine der Druckwirkflächen durch die Differenz zwischen dem äußeren Dichtdurchmesser D₁ eines das Hauptdichtungselement (10) gegenüber dem Gehäuse (1) abdichtenden Sekundärdichtungselementes (13) und dem mittleren Durchmesser D₃ der Dichtfläche (11) des Hauptdichtungselementes (10) und die andere, dem Raum (5) ausgesetzte Druckwirkfläche durch die Differenz zwischen dem inneren Dichtdurchmesser D₂ des Sekundärdichtungselementes (13) und dem Durchmesser D₃ definiert ist.

3. Kugelhahn nach Anspruch 1 oder 2, dadurch gekennzeichnet, daß der bestimmte Druck kleiner als der zulässige Abdichtungsdruck des Kugelhahnes ist.

## Claims

1. Ball valve having a housing (1) defining a throughgoing passage (2), furthermore having a bored ball element (8) rotatably held in the housing (1), the said ball element being moveable between an open and a closed position for the purpose of opening and closing the throughgoing passage, and furthermore having a pair of sealing arrangements (A,B) provided on the in-flow and out-flow side of the ball element for the purpose of sealing the ball element with respect to the housing, wherein the sealing arrangements define between themselves a chamber (5) which is substantially sealed with respect to the throughgoing passage at least in the closed position of the ball element and wherein at least the sealing arrangement on the out-flow side comprises the following elements: a main sealing element (10) which has a limited amount of movement relative to the ball element, a secondary sealing element (13) for the purpose of sealing the main sealing element with respect to the housing as well as a pre-tensioning element (12) for the purpose of pre-tensioning the main sealing element against the ball element, wherein the main sealing element has pressure effecting surfaces of which one surface is subjected to the medium pressure prevailing on the out-flow side of the ball element and the other surface is subjected to the medium pressure prevailing in the chamber and the surfaces are dimensioned in such a way that under a pre-determined amount of pressure in the chamber the main sealing element can be moved out of the sealing engagement with the ball element against a force which is exerted on the main sealing element by means of the pre-tensioning element and the pressure prevailing on the out-flow side of the main sealing element, characterisd in that the pre-tensioning element (12) is formed from an elastic carbon material such as compressed graphite having resilient-type force shaping characteristics and is disposed between a region, remote from the ball element in the axial direction, of the main sealing element as the secondary sealing element and the housing.

2. Ball valve according to claim 1, characterised in that one of the pressure effecting surfaces is defined by means of the difference between the external sealing diameter D₁ of a secondary sealing element (13) which seals the main sealing element (10) with respect to the housing (1) and the central diameter D₃ of the sealing surface (11) of the main sealing element (10) and the other pressure effecting surface exposed to the chamber (5) is defined by means of the difference between the internal sealing diameter D₂ of the secondary sealing element (13) and the diameter D₃.

3. Ball valve according to claim 1 or 2, characterised in that the predetermined pressure is less than the permissible sealing pressure of the ball valve.

## Revendications

1. Robinet à boisseau sphérique avec un boîtier (1) définissant un orifice de passage (2), un boisseau sphérique (8) percé par un passage et monté à pivot dans celui-ci qui peut être déplacé entre une position d'ouverture et une position de fermeture afin d'ouvrir et de fermer l'orifice de passage, et une paire de dispositifs d'étanchéité (A, B) prévus en amont et en aval du boisseau sphérique afin de rendre le boisseau sphérique étanche vis-à-vis du boîtier, tandis que les dispositifs d'étanchéité définissent entre eux une chambre (5) qui est fermée de manière essentiellement hermétique au moins en position de fermeture du boisseau sphérique par rapport à l'orifice de passage et tandis qu'au moins le dispositif d'étanchéité situé en amont présente les éléments suivants : un élément d'étanchéité principal (10) pouvant se déplacer de manière limitée par rapport au boisseau sphérique, un élément d'étanchéité secondaire (13) pour rendre étanche l'élément d'étanchéité principal par rapport au boîtier ainsi qu'un élément de précontrainte (12) pour précontraindre l'élément d'étanchéité principal en le poussant contre le boisseau sphérique, tandis que l'élément d'étanchéité principal possède des surfaces d'action de la pression dont l'une est exposée à la pression existant sur le côté amont du boisseau sphérique et dont l'autre est exposée à la pression régnant dans la chambre et qui sont dimensionnées de façon que, pour une pression déterminée dans la chambre, l'élément d'étanchéité principal peut se déplacer en quittant le contact étanche avec le boisseau sphérique à l'encontre de la force qui est exercée sur l'élément d'étanchéité principal par l'élément de précontrainte et la pression régnant sur le côté amont de l'élément d'étanchéité principal, caractérisé en ce que l'élément de précontrainte (12) est constitué d'un matériau élastique à base de carbone tel que du graphite comprimé ayant un comportement déformation/force élastique et qui est disposé entre une zone de l'élément d'étanchéité principal servant d'élément d'étanchéité principal et plus éloigné du boisseau sphérique en direction axiale et le boîtier.

2. Robinet à boisseau sphérique selon la revendication 1, caractérisé en ce que l'une des surfaces d'action de la pression est définie par la différence entre le diamètre d'étanchéité extérieur D₁ d'un élément d'étanchéité secondaire rendant étanche l'élément d'étanchéité principal (10) par rapport au boîtier (1) et le diamètre moyen D₃ de la surface d'étanchéité (11) de l'élément d'étanchéité (10), tandis que l'autre surface d'action de la pression existant dans l'enceinte (5) est définie par la différence entre le diamètre d'étanchéité intérieur D₂ de l'élément d'étanchéité secondaire (13) et le diamètre D₃.

3. Robinet à boisseau sphérique selon la revendication 1 ou 2, caractérisé en ce que la pression déterminée est inférieure à la pression d'étanchéité admissible du robinet à boisseau sphérique.
